# EUROPÄISCHE PATENTANMELDUNG

(11) **EP 2 110 870 A1**
(43) Veröffentlichungstag der Anmeldung: **21.10.2009**
(21) Anmeldenummer: 09100221.2
(22) Anmeldetag: 03.04.2009
(51) Int. Cl.: H01M 2/06, H01M 2/10, H01M 2/20

(54) **Energiespeicheranordnung, insbesondere in einem Fahrzeug**

(30) Priorität: 15.04.2008 DE 102008018944
(71) Anmelder: Continental Automotive GmbH, 30165 Hannover (DE)
(72) Erfinder: Baur, Frank, 90482 Nürnberg (DE); Brey, Roland, 93458 Eschlkam (DE)

(57) **Zusammenfassung**

Die Erfindung betrifft eine Energiespeicheranordnung, insbesondere in einem Fahrzeug, welche einen Energiespeicher und insbesondere einen Hochvoltenergiespeicher angeordnet in einem Gehäuse umfasst. Eine erste und eine zweite in dem Gehäuse angeordnete Polbuchse dienen zum elektrischen Anschluss an den Energiespeicher. Weiterhin enthält die Energiespeicheranordnung ein erstes und ein zweites mechanisches Dichtungselement, welches jeweils die erste und die zweite Polbuchse reversibel verschließt. Hierzu umfasst das erste und zweite Dichtungselement eine im Wesentlichen verschließbare Öffnung, in die je ein für die jeweilige Polbuchse vorgesehener Kontaktstift eines Gegensteckers passt.

## Beschreibung

Die Erfindung betrifft eine Energiespeicheranordnung, vor allem mit einer Batterie, die unter anderem in einem Fahrzeug angeordnet sein kann.

Batterien und andere Energiespeicher werden heutzutage in einer Vielzahl von Anwendungen eingesetzt. In Kraftfahrzeugen beziehungsweise allgemein im industriellen Bereich dienen derartige Energiespeicher zur Bereitstellung elektrischer Energie zum Betreiben verschiedener Verbraucher. Im oder Automotive-Bereich werden sie beispielsweise als Initialzünder für Brennstoffmotoren verwendet. Hierbei kommen unter anderem Batterien zum Einsatz, die eine hohe Gleichspannung im Bereich mehrerer 10 V liefern. Da durch die hohe Spannung und die daraus resultierenden relativ großen Ströme bei einer Berührung derartiger Energiespeicher eine Verletzungsgefahr besteht, gibt es seit längerem das Bedürfnis, derartige Energiespeicher zu schützen, um eine Verletzungsgefahr durch unsachgemäßen Gebrauch beziehungsweise aus Unachtsamkeit zu reduzieren.

Diese Aufgabe wird mit dem Gegenstand des unabhängigen Patentanspruchs 1 gelöst. Weiterbildende Maßnahmen und Ausgestaltungsformen der Erfindung ergeben sich aus den Unteransprüchen.

Die Erfindung zeichnet sich aus durch eine Energiespeicheranordnung, insbesondere in einem Fahrzeug, welche einen Energiespeicher umfasst. Dieser ist in einem Gehäuse angeordnet. Die Energiespeicheranordnung enthält weiterhin zwei in dem Gehäuse angeordnete Polbuchsen zum elektrischen Anschluss einer externen Last an den Energiespeicher. In die Polbuchsen passt jeweils ein dafür vorgesehener Kontaktstift.

Damit wir eine Energiespeicheranordnung geschaffen, die sich besonders leicht in ein Fahrzeug ein- und ausbauen lässt. Somit kann die Energiespeicheranordnung leicht ausgewechselt werden. Zudem ist für einen derartigen Austausch kein zusätzliches Werkzeug notwendig. Vielmehr werden mit Vorteil die Kontaktstifte in die dafür vorgesehenen Polbuchsen gesteckt, um einen elektrischen Kontakt herzustellen.

In einer vorteilhaften Ausgestaltung zeichnet sich die Energiespeicheranordnung ferner durch ein erstes und ein zweites mechanisches Dichtungselement aus. Dieses ist ausgestaltet, die jeweils die erste und die zweite Polbuchse reversibel zu verschließen. Hierbei umfasst das erste und das zweite Dichtungselement eine im Wesentlichen verschließbare Öffnung, in die je das für die jeweilige Polbuchse vorgesehener Kontaktstift passt.

Erfindungsgemäß wird demzufolge eine Energiespeicheranordnung geschaffen, insbesondere für Hochvoltenergiespeicher, welche Dichtungselemente aufweist, welche die zum elektrischen Anschluss vorgesehenen Polbuchsen reversibel verschließen. Dadurch wird eine versehentliche Kontaktierung beziehungsweise Berührung der Strom führenden Elemente des Energiespeichers vermieden. Durch die besondere Ausgestaltung des ersten und zweiten Dichtungselements mit einer im Wesentlichen verschließbaren Öffnung wird die Polbuchse darüber hinaus gegen Eindringen von Fremdkörpern oder auch Wasser und Schmutz geschützt.

Zudem ist der Kontaktstift vorgesehen, der in je eine der beiden Polbuchsen passt. Dadurch wird ein fehlerhafter Anschluss, d.h. polfalscher Anschluss des Energiespeichers an eine Last verhindert, wodurch die Verletzungsgefahr und die Gefahr von Beschädigungen des Energiespeichers oder der an die Kontaktstifte angeschlossenen Last verringert werden.

In einer Ausgestaltung der Erfindung umfasst die Energiespeicheranordnung weiterhin zwei Kontaktstifte, die mit einer elektrischen Last deren Stromversorgung verbunden sind. Zudem können die beiden Kontaktstifte Teil einer Halterung sein, die an einem Fahrzeug befestigt ist. Damit lassen sich über den Energiespeicher die in dem Fahrzeug befindlichen elektrischen Verbraucher mit dem notwendigen Strom versorgen. Zu solchen Verbrauchern gehören neben dem Motor auch die Motorsteuerungssysteme, Fahrgastsicherheitssysteme und Komfortanlagen des Fahrzeugs wie Klimaanlage und Navigation/Radio.

In einer weiteren Ausgestaltung zeichnet sich die Erfindung dadurch aus, dass die erste und die zweite Polbuchse jeweils eine unterschiedliche geometrische Form aufweisen. Dadurch wird verhindert, dass die Kontaktstifte fälschlicherweise in die dafür nicht vorgesehenen Polbuchsen gesteckt werden. Somit wird ein Kurzschluss und eine Beschädigung des Energiespeichers oder einer mit den Kontaktstiften verbundenen elektrischen Last vermieden.

In einer anderen Ausgestaltung umfassen die erste und die zweite Polbuchse jeweils in einem Teilbereich eine elektrisch leitende Kontaktfläche. Diese wird durch den jeweilig für die Polbuchse vorgesehenen Kontaktstift kontaktiert. In dieser Ausgestaltung ist somit nicht der vollständige Bereich der beiden Polbuchsen elektrisch leitend, sondern lediglich ein Teilbereich. Dadurch wird bei einem unsachgemäßen Gebrauch beispielsweise eines Zuführens eines dafür nicht vorgesehenen Kontaktstifts die Gefahr einer Beschädigung oder einer Verletzung der Person verringert. Zudem wird der Korrosionsschutz der Kontaktflächen verbessert.

In einer anderen Ausgestaltung zeichnet sich die Erfindung durch zusätzliche Befestigungselemente am Energiespeicher oder an dessen Gehäuse aus. Diese sind derart ausgestaltet, dass sie mit Befestigungselementen im Bereich der Kontaktstifte verbunden werden können. Insbesondere dann, wenn die Kontaktstifte Teil einer Anordnung insbesondere eines Fahrzeugs sind, sind die zusätzlichen Befestigungselemente ebenfalls an der Anordnung fixiert. Dadurch kann der Energiespeicher auch mechanisch mit der Anordnung verbunden und fixiert werden. Die Kontaktstifte dienen zum elektrischen Anschluss des Energiespeichers an eine mit den Kontaktstiften verbundene elektrische Last.

In einer Ausgestaltungsform sind die Befestigungselemente in Form eines Bindungsverschlusses ausgeführt. In einer anderen Ausführungsform umfassen die Befestigungselemente Schrauben und entsprechende Gegenstücke, sodass der Energiespeicher über die Befestigungselemente und die Schrauben an der Anordnung festgeschraubt wird. Dadurch kann der Energiespeicher beispielsweise in einem Fahrzeug fixiert werden. In einer anderen Ausgestaltungsform besitzt die Anordnung eine Vertiefung, in der der Energiespeicher eingesetzt wird. Dieser kann anschließend wieder an der Anordnung fixiert werden.

In einer weiteren Ausgestaltung der Erfindung zeichnet sich das erste und zweite Dichtungselement durch ein Bolzenelement aus, der mit einem Mechanismus in Wirkverbindung steht, welches bei einem Druck des Bolzelementes die Öffnung der Polbuchse zur Zuführung des Kontaktstiftes freigibt. Das Bolzenelement kann hierbei Teil des Dichtungselementes im Bereich der Polbuchse jedoch auch außerhalb der Polbuchse angeordnet sein. Diese Ausgestaltung verbessert den Schutz vor einem unsachgemäßen Öffnen des Dichtungselementes

In einer weiteren Ausbildungsform weist der Kontaktstift eine entsprechende geometrische Form auf und ist ausgeführt, bei einem Einführen in die dafür vorgesehene Polbuchse mit dem Bolzen in Wirkverbindung zu treten, derart, dass die Öffnung der Polbuchse freigegeben wird.

Im Weiteren wird die Erfindung unter Zuhilfenahme der Zeichnungen anhand verschiedener Ausführungsbeispiele im Detail erläutert. Es zeigen:
- Figur 1A: ein erstes Ausführungsbeispiel der Erfindung,
- Figur 1B: ein zweites Ausführungsbeispiel der Erfindung,
- Figur 2: ein Ausführungsbeispiel eines Dichtungselementes zum Verschließen einer Polbuchse,
- Figur 3: ein Ausführungsbeispiel des Dichtungselementes mit dem durchgesteckten Kontaktstift,
- Figur 4: eine Querschnittsansicht eines Energiespeichers mit darin befindlichem Kontaktstift,
- Figur 5: eine Querschnittsansicht einer weiteren Ausführungsform vor dem Zuführen des Kontaktstiftes,
- Figur 6: eine schematische Querschnittsansicht einer weiteren Ausführungsform eines Energiespeichers mit Polbuchse,
- Figur 7: die Darstellung der Ausführung gemäß Figur 6 mit zugeführtem Kontaktstift,
- Figur 8: die Darstellung gemäß der Ausführungsform der Figur 6 bei geöffneter Polbuchse.

Die in den Figuren dargestellten Ausführungsformen sind nicht maßstäblich gezeichnet, sondern es sind zur Verdeutlichung der unterschiedlichen Elemente diese entsprechend hervorgehoben. Wirkungs- beziehungsweise funktionsgleiche Bauelemente in den Ausführungsformen tragen die gleichen Bezugszeichen.

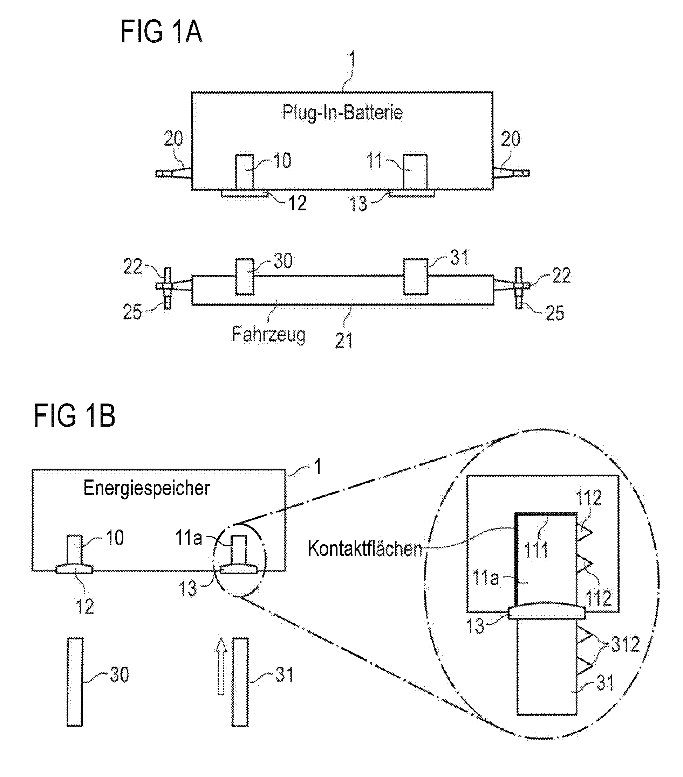

Figur 1A zeigt ein erstes Ausführungsbeispiel einer Energiespeicheranordnung, wie sie beispielsweise in Fahrzeugen einsetzbar ist. Die Energiespeicheranordnung umfasst einen Energiespeicher 1, der beispielsweise als Gleichspannungsbatterie ausgeführt ist. Der Energiespeicher ist in einem Gehäuse angeordnet, dass zwei darin angeordnete Polbuchsen 10 und 11 aufweist. Die Polbuchsen 10 und 11 sind für einen elektrischen Anschluss ausgebildet und stellen gleichzeitig den Kontakt zu dem Energiespeicher her. Durch ein Stecken von Kontaktstiften in die Polbuchse wird der elektrische Kontakt hergestellt.

Die Öffnungen sind in der vorliegenden Ausführung jeweils mit einem Dichtungselement 12 und 13 reversibel verschlossen. Dadurch liegen die Öffnungen der Polbuchsen 10 und 11 nicht frei, sondern sind von den Dichtungselementen abgedeckt. Entsprechend werden eine versehentliche Berührung der Polbuchsen und dadurch ein elektrischer Stromkontakt zu dem Energiespeicher vermieden.

Zur Kontaktierung des Energiespeichers mit einer in einem Fahrzeug befindlichen elektrischen Last ist eine Halterungsanordnung 21 vorgesehen, an der zwei Kontaktstifte 30 und 31 befestigt sind. Die Kontaktstifte sind so ausgeführt, dass sie in die entsprechenden Polbuchsen 10 und 11 des Energiespeichers 1 passen. Insbesondere befinden sie sich in einem den Polbuchsen 10 und 11 entsprechenden Abstand zueinander und umfassen die gleiche Größe. Die Halterungsanordnung 21 kann sich beispielsweise innerhalb der Karosserie des Fahrzeugs unter anderem im Motorraum befinden.

Zur Kontaktierung des Energiespeichers mit der elektrischen Last wird der Energiespeicher 1 auf die beiden Kontaktstifte aufgesteckt und dadurch der elektrische Kontakt hergestellt. Zusätzlich weist das Gehäuse des Energiespeichers 1 Befestigungselemente 20 auf, mit denen über die an der Haltevorrichtung 21 festgebrachten Befestigungselemente 22 der Hochenergiespeicher an der Haltevorrichtung 21 fixiert wird. Zu diesem Zweck sind Schrauben 25 vorgesehen, die durch entsprechende Durchführungen in den Befestigungselementen 20 und 22 durchgesteckt und anschließend mit Gegenmuttern festgeschraubt werden.

Mit anderen Worten wird somit der Energiespeicher 1 über die Befestigungselemente mit Hilfe von Schrauben an der Haltevorrichtung und dem Fahrzeug fixiert. Alternativ können die Befestigungselemente auch durch eine Klemmvorrichtung realisiert werden. Dies erlaubt es, bei einer einfachen Maßnahme einerseits einen elektrischen Kontakt zwischen einer im Fahrzeug befindlichen elektrischen Last und dem Energiespeicher herzustellen und andererseits den Energiespeicher starr mit dem Fahrzeug der Haltevorrichtung zu verbinden.

Um zu verhindern, dass die Kontaktstifte 30 und 31 der Haltevorrichtung 21 in die falschen Polbuchsen 10 und 11 des Energiespeichers 1 gesteckt werden, sind die Positionen der Polbuchsen bezogen auf die Form des Energiespeichers 1 asymmetrisch angeordnet. Dies ist in der Ausführung dadurch dargestellt, dass die Polbuchsen leicht auf der linken Seite des Energiespeichers 1 im Gehäuse angebracht sind. Mit anderen Worten ist der Abstand der beiden Polbuchsen 10 und 11 zum äußeren Rand des Gehäuses unterschiedlich. Dadurch würde bei einem Versuch, den Energiespeicher 1 polfalsch in die beiden Kontaktstifte einzustecken, eine Fixierung über die Halteelemente 20 und 22 unmöglich.

Alternativ dazu können die beiden Stifte 30 und 31 und die dazugehörigen Polbuchsen im Energiespeicher 1 unterschiedlich ausgeformt sein. Beispielsweise kann wie hier beim Stift 31 und der Polbuchse 11 dargestellt einer der beiden Stifte mit einem deutlich größeren Durchmesser oder einer anderen Länge versehen sein. Auf diese Weise ist es nicht möglich, den Energiespeicher auf falsche Weise an die Haltevorrichtung 21 anzubringen. Zudem können durch die Größe oder die Form der Kontaktstifte 30 und 31 beziehungsweise der Polbuchsen 10 und 11 der Minus- und Pluspol des Energiespeichers leichter identifiziert werden.

Beim Aufstecken des Energiespeichers 1 auf die Kontaktstifte 30 und 31 wird die in den Dichtungselementen 12 und 30 vorgesehene Öffnung geöffnet und der Kontaktstift berührt die entsprechenden Kontaktflächen der Polbuchsen 10 und 11 und schließt somit die elektrische Kontaktierung.

Ein weiteres Ausführungsbeispiel einer solchen Identifikation von Kontaktstiften zu den zugehörigen Polbuchsen ist in Figur 1B gezeigt. Bei dieser ist beispielhaft die Polbuchse 11 vergrößert dargestellt. Auf der Innenseite der Polbuchse 11a ist eine Kontaktfläche 111 aufgebracht, die den elektrischen Kontakt zwischen dem Kontaktstift 31 und dem Energiespeicher 1 bildet.

Auf einer Seite der Polbuchse sind zusätzliche Schutzelemente 112 in Form besonders geometrisch ausgestalteter Vertiefungen angeordnet. In diese passen entsprechende Schlüsselelemente 312, die Teil des Kontaktstiftes 31 bilden. Diese Zapfen 312 können in den Kontaktstift 31 versenkt werden und sind innerhalb des Kontaktstiftes mit Federn zur Rückstellung ausgestattet.

Beim Einstecken des Kontaktstiftes 31 in die Polbuchse 11a des Energiespeichers 1 wird das Dichtungselement 13 geöffnet, sodass dieses den dahinter liegender Raum der Polbuchse 11a frei gibt. Die Zapfen 312 werden beim Einschieben des Kontaktstiftes 31 eingedrückt und springen aufgrund der vorhandenen Feder im Bereich der Vertiefungen 112 der Polbuchse 11a wieder hinaus. Dadurch werden einerseits der Kontaktstift und die dazugehörige Polbuchse identifiziert und der Kontaktstift verriegelt.

In einer alternativen Ausgestaltung ist es möglich, den Strom über diese Zapfen 312 zu leiten, in dem die dazugehörigen Vertiefungen 112 in der Polbuchse 11a die Kontaktfläche mit dem Energiespeicher bilden. Dadurch wird die Sicherheit erhöht, da ein elektrischer Kontakt lediglich bei der Zuführung des richtigen Kontaktstiftes mit den entsprechenden Zapfen 312 gewährleistet ist.

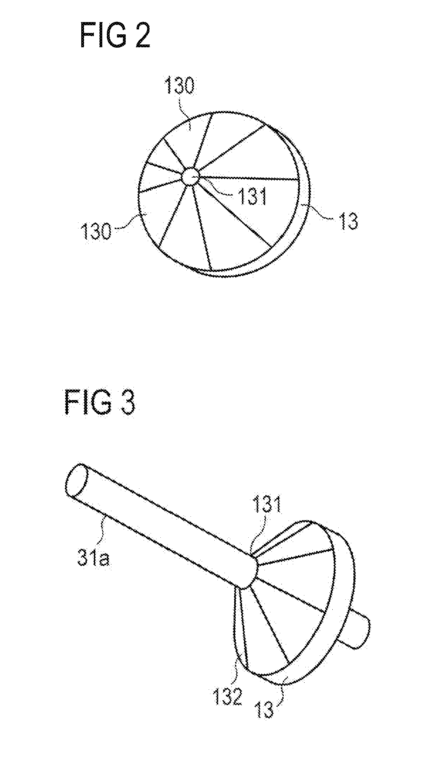

Figur 2 zeigt ein Beispiel eines Dichtungselementes 13. Dieses ist in Kunststoff trichterförmig mit einer zentralen Öffnung 131 ausgeführt. Zudem ist es in insgesamt acht gleich große Segmente 130 unterteilt, die beweglich angeordnet sind.

In diesem Zustand ist das Dichtungselement über der Polbuchse angeordnet und verschließt deren Öffnung.

Beim Einstecken eines Kontaktstiftes vom Gegenstecker, wie in Figur 3 dargestellt, öffnet sich die Öffnung 131, in dem die einzelnen Segmente 130 leicht nach innen gedrückt werden. Der zwischen den einzelnen Segmenten vorhandene Spalt 132 vergrößert sich dadurch leicht und der Kontaktstift wird eingeschoben. Andererseits ist dieses Dichtungselement reversibel, sodass sich die vorhandene Öffnung beim Entfernen des elektrischen Kontaktstiftes 31a wieder schließt.

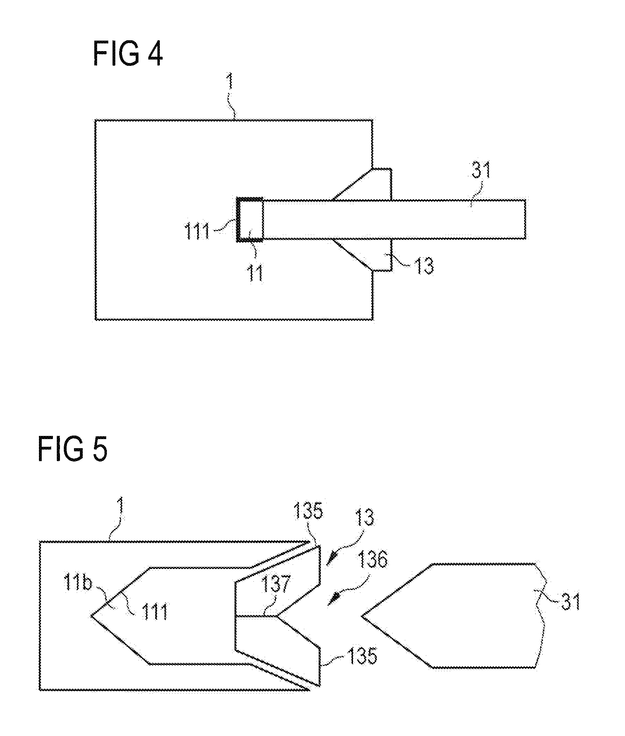

Figur 4 zeigt eine weitere Ausführungsform in Querschnittansicht eines Energiespeichers 1 aufweisend ein Gehäuse mit einer darin ausgestalteten Polbuchse sowie einer Kontaktfläche 111, die einen elektrischen Kontakt zum restlichen Energiespeicher herstellt. In diesem Ausführungsbeispiel ist ein elektrischer Kontaktstift 31 vom Gegenstecker eingeführt, sodass das Dichtungselement 13 leicht nach außen gerutscht ist. Der elektrische Kontaktstift 31 kontaktiert die Kontaktfläche 111, sodass der elektrische Kontakt hergestellt wird. Beim Entfernen des Kontaktstiftes rutscht das Dichtungselement 13 wieder in die vorhandene Öffnung und verschließt es dadurch.

Ein derartiges Ausführungsbeispiel ist in der Figur 5 dargestellt. Bei diesem ist die Polbuchse 11b des Energiespeichers 1 pfeilförmig mit einem spitz zulaufenden Teilbereich ausgestaltet. In diesem ist die Kontaktfläche 111 zur elektrischen Kontaktierung des Energiespeichers angeordnet. Zusätzlich ist ein V-förmiges oder trichterförmiges Dichtungselement 13 vorgesehen. Dieses umfasst zwei Halbscheiben 135, die sich im Bereich 137 berühren, wodurch ein Trichter 136 mit einer reversible Öffnung gebildet wird.

Zur Zuführung und zur elektrischen Kontaktierung ist ein Kontaktstift 31 vorgesehen, der ebenfalls eine zulaufende Spitze aufweist. Beim Einstecken in den Trichterbereich 136 des Dichtungselementes 13 öffnet sich nun die gemeinsame Schnittfläche 137 und schiebt beziehungsweise drückt die beiden Teilabschnitte 135 nach außen. Dadurch wird die Polbuchse 11b freigegeben. Der Kontaktstift 31 dringt durch das Dichtungselement 13 hindurch und kontaktiert die Kontaktfläche 111 der Polbuchse 11b.

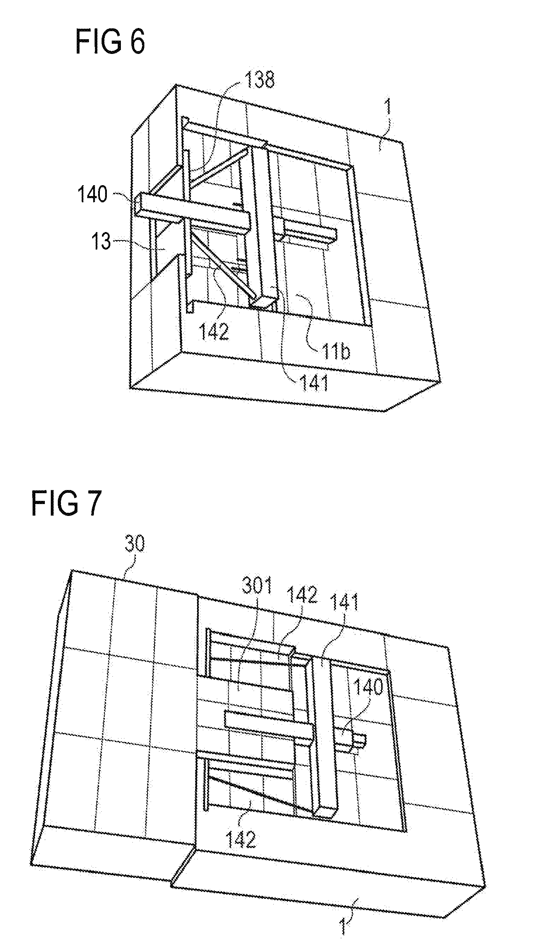

Figur 6 zeigt ein weiteres Ausführungsbeispiel im Querschnitt einer Polbuchse mit einer wieder verschließbaren Öffnung. In dieser Ausführung ist ein Bolzen 140 vorgesehen, der durch das Dichtungselement 13 hindurchragt und mit einem Hebemechanismus 141, 142 verbunden ist. Durch Drücken des Bolzens 140 verschiebt sich das Hebeelement 141 und öffnet über die beiden Spannfedern 142 die Verschlussplatten 138 des Dichtungselementes 13.

In Figur 7 ist nunmehr die Polbuchse in dem Energiespeicher 1 mit darin eingesteckten Kontaktstift des Gegensteckers 30 dargstellt. Der Kontaktstift 301 ist U-förmig ausgebildet, sodass er den entsprechenden Druck auf den Bolzen 140 ausübt, um den Verschluss 138 zu öffnen.

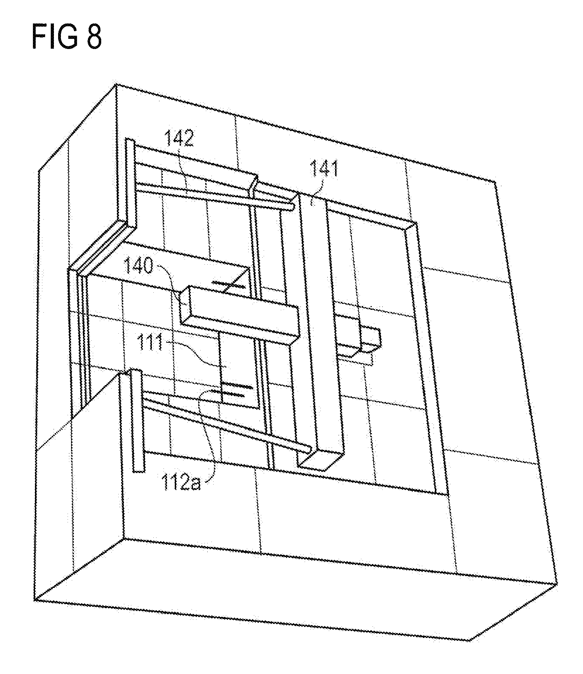

Figur 8 zeigt schließlich die Polbuchse bei geöffnetem Verschluss, in dem der Bolzen 140 eingedrückt ist. Über die Wirkverbindung mit dem Hebemechanismus 141 werden die beiden Spannfedern 142 auseinandergedrückt, sodass sich die Verschlusselemente 138 des Dichtelements 13 öffnen. Freigelegt ist nunmehr die Kontaktfläche 111 mit dazugehörigen Sicherungsstiften 112a. Diese enthalten im Kontaktstift des Gegensteckers entsprechende Senklöcher, wodurch die Kontaktierung mit der Kontaktfläche 111 gewährleistet ist. Die Sicherungsstifte 112 verringern somit die Gefahr eines Anschließens vertauschter Pole.

## Patentansprüche

1. Energiespeicheranordnung, insbesondere in einem Fahrzeug, umfassend
- einen Energiespeicher (1), insbesondere einen Hochvoltenergiespeicher angeordnet in einem Gehäuse;
- eine erste und eine zweite in dem Gehäuse angeordnete Polbuchse (10, 11), die den Energiespeicher (1) elektrisch kontaktieren und in die je ein für die jeweilige Polbuchse (10, 11) vorgesehener Kontaktstift (30, 31) passt.

2. Energiespeicheranordnung nach Anspruch 1, weiter umfassend:
- ein erstes und ein zweites mechanisches Dichtungselement (12, 13), welches jeweils eine der beiden Polbuchsen (10, 11) reversibel verschließt, wobei das erste und das zweite Dichtungselement (12, 13) eine im Wesentlichen verschließbare Öffnung (137, 131) umfasst.

3. Energiespeicheranordnung nach einem der Ansprüche 1 bis 2, bei der die erste und die zweite Polbuchse (10, 11) eine unterschiedliche geometrische Form, insbesondere unterschiedlichen Durchmesser und/oder Tiefe aufweisen.

4. Energiespeicheranordnung nach Ansprüche 1 bis 3, bei der die erste und zweite Polbuchse (10, 11) jeweils in einem Teilbereich eine elektrische leitende Kontaktfläche (111) umfassen, die der jeweilige für die Polbuchse (10, 11) vorgesehene Kontaktstift (30, 31) kontaktiert.

5. Energiespeicheranordnung nach einem der Ansprüche 1 bis 4, bei der die Polbuchse (11a) in einem Teilbereich (112) eine Vertiefung aufweist, so dass ein Innendurchmesser der Polbuchse (11a) in dem Teilbereich (112) größer ist als ein Durchmesser einer Öffnung der Polbuchse (11a).

6. Energiespeicheranordnung nach Anspruch 5, bei welcher der für die Polbuchse (11a) vorgesehene Kontaktstift (31) eine verschiebbare Kontaktfahne aufweist, die bei in die Polbuchse (11a) eingestecktem Kontaktstift (31) die Vertiefung (112) ausfüllt.

7. Energiespeicheranordnung nach einem der Ansprüche 1 bis 5, weiter umfassend:
- wenigstens ein am Gehäuse des Energiespeichers (1) angebrachtes Befestigungselement (20), welches ausgebildet ist, den Energiespeicher an einer Haltevorrichtung (21) zu befestigen.

8. Energiespeicheranordnung nach Anspruch 7, bei welcher die Haltevorrichtung die Kontaktstifte (30, 31) und ein weiteres Gegenbefestigungselement (22, 25) umfasst.

9. Energiespeicheranordnung nach einem der Ansprüche 2 bis 8, bei welcher die Dichtungselemente (13) einen Verschlussbolzen (140) aufweisen, der mit einem Mechanismus (141) in Wirkverbindung steht, welches bei einer Kraftausübung auf den Verschlussbolzen (140) die Öffnung der Polbuchse (11b) zur Zuführung des Kontaktstiftes freigibt.

10. Energiespeicheranordnung nach Anspruch 9, bei welcher der Verschlussbolzen (140) außerhalb der Polbuchse angeordnet ist.

11. Energiespeicheranordnung nach einem der Ansprüche 1 bis 10, bei welcher die Dichtungselemente mit einem Kunststoffmaterial gebildet sind.
